# EUROPEAN PATENT APPLICATION

(11) **EP 2 949 872 A1**
(43) Date of publication of application: **02.12.2015**
(21) Application number: 14170015.3
(22) Date of filing: 27.05.2014
(51) Int. Cl.: F01D 9/04, F02C 7/28

(54) **Turbomachine with a seal for separating working fluid and coolant fluid of the turbomachine and use of the turbomachine**

(71) Applicant: Siemens Aktiengesellschaft, 80333 München (DE)
(72) Inventor: Granberg, Per, 61021 NORSHOLM (SE); Szijarto, Janos, 61295 Finspong (SE)

(57) **Abstract**

Subject matter of the invention is a turbomachine as well as a use of the turbomachine. The turbomachine, for instance a gas turbine or a steam turbine, comprises a stator with at least one stator component, a rotor with at least one rotor component and at least one working fluid channel for channeling a working fluid for driving the rotor, wherein the working fluid channel is bordered by the stator component and the rotor component, the stator component comprises at least one coolant fluid channel (coolant bore) for cooling the stator component with the aid of a coolant fluid. At least one separation barrier is arranged between the working fluid channel and the coolant fluid channel for separating the coolant fluid channel and the working fluid channel from each other. The turbomachine is characterized in that the separation barrier comprises at least two piston rings. The two piston rings are coaxially arranged to each other defining a piston ring space between the piston rings. The piston ring space is a part of the coolant fluid channel. The turbomachine is used for producing electricity by leading the working fluid to rotor blades of the rotor (coupled to a generator) through the working fluid channel.

## Description

### BACKGROUND OF THE INVENTION

### 1. Field of the invention

The present invention refers to a turbomachine with a seal for separating working fluid and coolant fluid of the turbomachine and use of the turbomachine.

### 2. Description of the related art

A turbomachine, for instance a gas turbine or a steam turbine, is used for power generation. Such a turbomachine comprises a stator with at least one stator component and a rotor with at least one rotor component.

A rotor component of the rotor is an axial shaft with a plurality of rotor blades. The rotor blades are arranged annularly around the axial shaft.

Stator components are a (main) stator ring, a plurality of guide vanes for guiding working fluid of the turbomachine (hot gas in case of a gas turbine and superheated steam in case of a steam turbine) and a vane carrier ring for carrying the guide vanes. The stator ring and the rotor shaft are coaxially arranged to each other. The guide vanes are arranged annularly around the vane carrier ring.

The guide vanes assist in guiding the working fluid for the impingement of the working fluid on the rotor blades of the rotor.

The working fluid is lead through a working fluid channel of the turbomachine. The working fluid channel is bordered by at least one of the stator components and by at least one of the rotor components. Due to very high temperatures of the working fluid the bordering stator component and/or the bordering rotor component are highly stressed.

In order to reduce the surface temperature of the guide vanes and to increase the operational life span of the guide vanes, a coolant fluid (cooling fluid) is dispensed for cooling the guide vanes. A flow of the coolant fluid on the surface of a guide vane causes a transfer of heat from the guide vane to the coolant fluid, thereby reducing the temperature of the guide vane.

For that, the coolant fluid is dispensed into a coolant fluid channel (cooling fluid channel) which is preferably located between the vanes and the stator ring. The coolant fluid channel has to be sealed for an efficient circulation of the coolant fluid inside the coolant fluid channel and for preventing a leakage of the coolant fluid from the coolant fluid channel into other sections of the turbomachine, especially the working fluid channel.

However, the arrangement of the guide vanes around the vane carrier ring of the stator, and the arrangement of the coolant fluid channel between the guide vanes and the guide vane carrier ring of the stator, can result in one or more gaps. Furthermore, due to a relative displacement of a guide vane, guide vane carrier ring and the main stator ring during the operation of the turbomachine, a dilation of the existing gaps can't be avoided. This leads to an increased leakage of the coolant fluid into other sections of the turbomachine. Therewith, the desired cooling of the guide vanes is not achieved. An efficiency of the cooling mechanism is reduced.

In order to reduce the described problem the aforementioned gaps have to be avoided for preventing the leakage of the coolant fluid from the coolant fluid channel. Additionally, sealing arrangements with piston rings for sealing the gaps are provided. However, such sealing arrangements comprise stiff sealing components. During operation, cracks in the stiff sealing components occur. These cracks lead to an increased leakage. Thus, the sealing efficiency of the sealing components is limited.

### SUMMARY OF THE INVENTION

It is an object of the invention to provide a turbomachine with an efficient sealing for separating the coolant fluid of the turbomachine and the working fluid of the turbomachine.

A further object of the invention is the use of the turbomachine.

These objects are achieved by the invention specified in the claims.

A turbomachine is provided which comprises a stator with at least one stator component, a rotor with at least one rotor component and at least one working fluid channel for channeling a working fluid for driving the rotor, wherein the working fluid channel is bordered by the stator component and the rotor component, the stator component comprises at least one coolant fluid channel (coolant bore) for cooling the stator component with the aid of a coolant fluid and at least one separation barrier is arranged between the working fluid channel and the coolant fluid channel for separating the working fluid channel and the coolant fluid channel from each other. The turbomachine is characterized in that the separation barrier comprises at least two piston rings, the two piston rings are coaxially arranged to each other defining a piston ring space between the piston rings and the piston ring space is a part of the coolant fluid channel.

This turbomachine is used for producing electricity by leading the working fluid to rotor blades of the rotor through the working fluid channel. For that, the rotor is coupled to at least one generator.

The working fluid is hot gas of a gas turbine or superheated steam of a steam turbine. The hot gas of the gas turbine comprises exhaust gases of a burning process (oxidation of a fuel). A temperature of the hot gas reaches temperatures of more than 1000 °C. The coolant fluid is preferably air.

There is an inner piston ring (forward piston ring) and an outer piston ring (after piston ring). The piston rings are arranged such that piston ring rotational axes of the piston rings (parallel to normals of piston ring planes which are formed by the piston rings) are substantially parallel oriented to a radial direction of the rotor (substantially perpendicular to the axial direction of the rotor). Substantially parallel or perpendicular includes a deviation of the orientation of up to 10° from the parallel or perpendicular orientation. Preferably, the deviation is below 5°.

By the aid of the piston rings an efficient cooling of the stator component is possible. Additionally, by the aid of the piston rings working fluid can't get to the coolant fluid channel and/or coolant fluid can't get to the working fluid channel. A contacting of the coolant fluid and the working fluid is inhibited. The fluids don't come into contact to each other.

Concerning a preferred embodiment the stator component is a vane carrier ring. The vane carrier ring comprises the coolant fluid channel. Guide vanes are attached to the vane carrier ring such that the guide vanes can be cooled via the coolant fluid which can be led trough the coolant fluid channel.

Preferably, the stator comprises at least one further stator component which is a main stator ring. The vane carrier ring and the main stator ring are connected to each other via the piston rings such that the piston ring space is additionally bordered by the vane carrier ring and the main stator ring. The piston ring space is formed by the piston rings, the vane carrier ring and the main stator ring.

Concerning a further preferred embodiment the vane carrier ring and/or the main stator ring comprise at least one piston ring gap for accommodating at least one of the piston rings. The piston rings can be at least partly located in the piston ring gaps. Such a piston ring gap can be formed in the vane carrier ring and/or in the main stator ring.

Preferably, the piston rings are developed such that a thermally induced replacement and/or thermally induced movement of the vane carrier ring and/or the main stator ring can be compensated. Due to thermal stress which occurs while the operation of the turbomachine components of the turbomachine move relatively to each other. By this, relatively large axial movements and/or relatively small radial movements can be compensated. With the aid of the invention these movements don't affect the efficient cooling of the components. The sealing mechanism is very reliable.

### BIEF DESCRIPTION OF THE DRAWINGS

Further features and advantages of the invention are produced from the description of exemplary embodiment with reference to the drawings. The drawings are schematic.

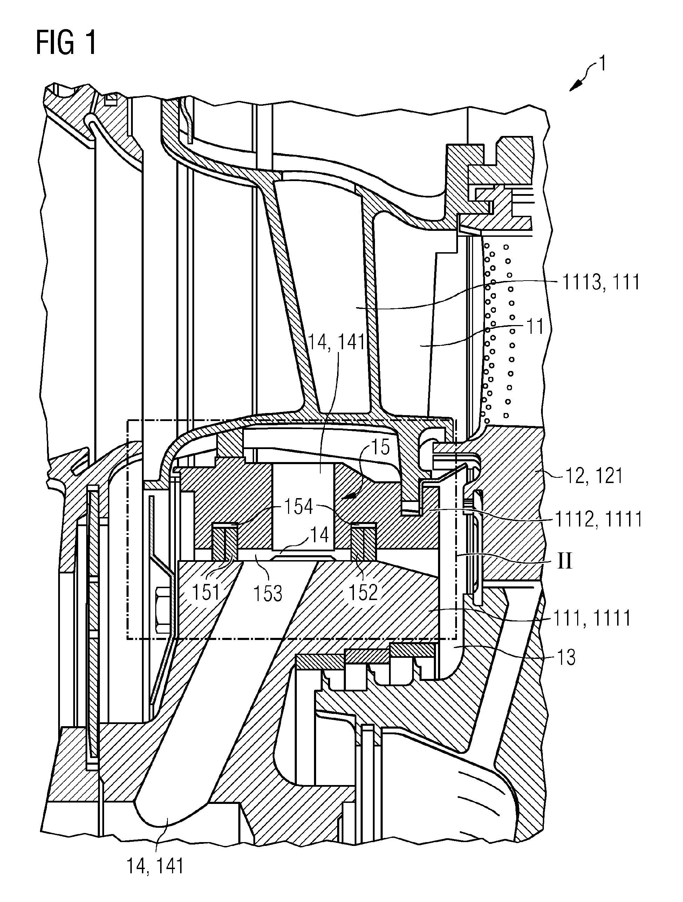

Figure 1 shows a cross section of a turbomachine.

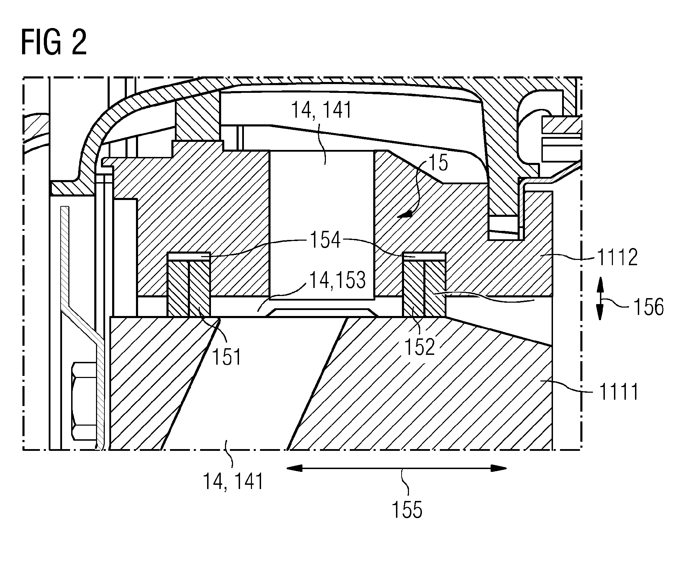

Figure 2 shows a detail of figure 1.

### DETAILED DESCRIPTION OF THE INVENTION

Given is a turbomachine 1. The turbomachine is a gas turbine. The turbomachine 1 comprises a stator 11 with stator components 111. Stator components are an annular main stator ring 1111, an annular vane carrier ring 1112 and guide vanes 1113.

The turbomachine comprises additionally a rotor 12 with at least one rotor component 121. The rotor component comprises an axial rotor shaft on which a number of rotor blades is arranged for driving the rotor shaft. The rotor shaft, the vane carrier ring 1112 and main stator ring 1111 are coaxially arranged to each other.

At least one working fluid channel 13 for channeling the working fluid (131, hot exhaust gas of a combustion process) to the rotor blades is arranged between the stator components 111 and the rotor shaft 121. Through the working fluid channel 13 the working fluid 131 can be led to the rotor blades for driving the rotor 12. The working fluid channel 13 is bordered by the stator components (main stator ring, vane carrier ring) and the rotor component (rotor shaft).

The stator components comprise a coolant fluid channel 14 for cooling the stator components with the aid of a coolant fluid 141. The coolant fluid is air.

Between the working fluid channel 13 and the coolant fluid channel 14 a separation barrier 15 is arranged for separating the coolant fluid channel 14 and the working fluid channel 13 from each other.

The separation barrier 15 comprises two piston rings (forward piston ring, 151 and after piston ring, 152). The two piston rings 151 and 152 are coaxially arranged to each other defining a piston ring space 153 between the piston rings 151 and 152. The piston ring space 153 is a part of the coolant fluid channel 14.

The vane carrier ring 1112 and the main stator ring 1111 comprise piston ring gaps 154 for accommodating the piston rings 151, 152. The piston rings 151 and 152 can be located in the piston ring gaps.

With the aid of the piston rings 151 and 152 a thermally induced replacement and a thermally induced movement of the vane carrier ring 1112 and the main stator ring 1111 due to relatively large axial movements 155 and/or relatively small radial movements 155 can be compensated.

This turbomachine is used for producing electricity by leading the working fluid to the rotor blades of the rotor through the working fluid channel. For the production of electricity the rotor is coupled to a generator.

## Claims

1. Turbomachine (1) comprising
- a stator (11) with at least one stator component (111, 1111, 1112));
- a rotor (12) with at least one rotor component (121);
- at least one working fluid channel (13) for channeling a working fluid (131) for driving the rotor, wherein
- the working fluid channel is bordered by the stator component and the rotor component;
- the stator component (111, 1111, 1112) comprises at least one coolant fluid channel (14) for cooling the stator component (111, 1111, 1112) with the aid of a coolant fluid (141); and
- at least one separation barrier (15) is arranged between the working fluid channel (13) and the coolant fluid channel (14) for separating the working fluid channel (13) and the coolant fluid channel (14) from each other;
**characterized in that**
- the separation barrier (15) comprises at least two piston rings (151, 152);
- the two piston rings (151, 152) are coaxially arranged to each other defining a piston ring space (153) between the piston rings (151, 152); and
- the piston ring space (152) is a part of the coolant fluid channel (14).

2. Turbomachine according to claim 1, wherein the working fluid (141) is hot gas of a gas turbine or superheated steam of a steam turbine.

3. Turbomachine according to claim 1 or 2, wherein the stator component (111) is a vane carrier ring (1112).

4. Turbomachine according to claim 3, wherein
- the stator (12) comprises at least one further stator component (111) which is a main stator ring (1111) and
- the vane carrier ring (1112) and the main stator ring (1111) are connected to each other via the piston rings (151, 152) such that the piston ring space (152) is additionally bordered by the vane carrier ring (1112) and the main stator ring (1111).

5. Turbomachine according to one of the claims 1 to 4, wherein the vane carrier ring (1112) and/or the main stator ring (1111) comprise at least one piston ring gap (154) for accommodating at least one of the piston rings (151, 152).

6. Turbomachine according to claim 5, wherein the piston rings (151, 152) are developed such that a thermally induced replacement and/or thermally induced movement of the vane carrier ring (1112) and/or the main stator ring (1111) can be compensated.

7. Use of the turbomachine according to one of the claims 1 to 6 for producing electricity by leading the working fluid to rotor blades of the rotor through the working fluid channel
